# EUROPÄISCHE PATENTANMELDUNG

(11) **EP 3 185 340 A2**
(43) Veröffentlichungstag der Anmeldung: **28.06.2017**
(21) Anmeldenummer: 16194563.9
(22) Anmeldetag: 19.10.2016
(51) Int. Cl.: H01M 4/86, H01M 8/0254, H01M 8/026, H01M 8/1006

(54) **BRENNSTOFFZELLENVORRICHTUNG**

(30) Priorität: 21.12.2015 DE 102015226125
(71) Anmelder: ROBERT BOSCH GMBH, 70442 Stuttgart (DE)
(72) Erfinder: Heeren, Imke, 70199 Stuttgart (DE); Haeffelin, Andreas, 71665 Vaihingen (DE)

(57) **Zusammenfassung**

Die Erfindung geht aus von einer Brennstoffzellenvorrichtung, mit einer Brennstoffzelleneinheit (12a-j), welche zumindest ein plattenartiges Element (14a-j) aufweist.

Es wird vorgeschlagen, dass das plattenartige Element (14a-j) zumindest ein Verwirbelungselement (16a-j) aufweist, welches dazu vorgesehen ist, eine zumindest im Wesentlichen laminare Gasströmung (18a-j) zumindest teilweise zu verwirbeln.

## Beschreibung

### Stand der Technik

Es ist bereits eine Brennstoffzellenvorrichtung, mit einer Brennstoffzelleneinheit, welche zumindest ein plattenartiges Element mit einer zumindest im Wesentlichen ebenen Oberfläche aufweist, vorgeschlagen worden.

### Offenbarung der Erfindung

Die Erfindung geht aus von einer Brennstoffzellenvorrichtung, mit einer Brennstoffzelleneinheit, welche zumindest ein plattenartiges Element aufweist.

Es wird vorgeschlagen, dass das plattenartige Element zumindest ein Verwirbelungselement aufweist, welches dazu vorgesehen ist, eine zumindest im Wesentlichen laminare Gasströmung zumindest teilweise zu verwirbeln.

Unter einer "Brennstoffzellenvorrichtung" soll in diesem Zusammenhang insbesondere eine Vorrichtung verstanden werden, welche dazu vorgesehen ist, zumindest eine chemische Reaktionsenergie zumindest eines insbesondere kontinuierlich zugeführten Brenngases, insbesondere Wasserstoff und/oder Kohlenstoffmonoxid, und zumindest eines Oxidationsmittels, insbesondere Sauerstoff, insbesondere in elektrische und/oder thermische Energie, umzuwandeln. Die zumindest eine Brennstoffzellenvorrichtung ist vorzugsweise als Festoxid-Brennstoffzelle (SOFC) ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Brennstoffzelleneinheit" soll in diesem Zusammenhang insbesondere eine Einheit verstanden werden, welche insbesondere zumindest teilweise eine äußere Hülle der Brennstoffzellenvorrichtung ausbildet. Ferner kann die Brennstoffzelleneinheit insbesondere passive Elemente, insbesondere zu einer Gasführung und/oder Gasleitung und/oder zu einer Montage der Brennstoffzellenvorrichtung, umfassen. Insbesondere ist die Brennstoffzelleneinheit dazu vorgesehen, zumindest einen Gasraum zu definieren, welcher in zumindest einem Betriebszustand zu einer Aufnahme zumindest eines Reaktanten, insbesondere eines Brenngases, vorgesehen ist. Unter einem "Gasraum" soll insbesondere ein räumlicher Bereich verstanden werden, der zumindest teilweise und vorzugsweise zumindest im Wesentlichen allseitig, insbesondere abgesehen von Zuleitungen und/oder Ableitungen, von einer einer sichtbaren Außenfläche gegenüberliegenden, insbesondere zumindest teilweise nicht sichtbaren, Innenfläche der Brennstoffzelleneinheit begrenzt ist. Darunter, dass die Brennstoffzelleneinheit den zumindest einen Gasraum "zumindest im Wesentlichen definiert" soll insbesondere verstanden werden, dass eine gedachte, den zumindest einen Gasraum umgebende, geschlossene Hüllfläche zu zumindest 80 %, vorzugsweise zu zumindest 85 %, vorteilhaft zu zumindest 90 % und besonders vorteilhaft zu zumindest 95 % von einer durch die zumindest eine Brennstoffzelleneinheit gebildeten äußeren Hülle bedeckt ist.

Unter einem "plattenartigen Element" soll insbesondere ein räumliches Element verstanden werden, welches in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50 %, vorzugsweise weniger als 25 % und besonders bevorzugt weniger als 10 % einer Flächenerstreckung des räumlichen Elements parallel zur Ebene, insbesondere einer kleinsten Flächenerstreckung des Elements parallel zur Ebene beträgt. Unter einem "Verwirbelungselement" soll in diesem Zusammenhang insbesondere ein an einer Oberfläche des plattenartigen Elements angeordnetes Element verstanden werden, welches dazu vorgesehen ist, eine zumindest im Wesentlichen laminare, zumindest im Wesentlichen parallel zu einer Haupterstreckungsebene des plattenartigen Elements verlaufende Gasströmung zumindest teilweise zu verwirbeln. Insbesondere kann das plattenartige Element einseitig oder beidseitig zumindest ein Verwirbelungselement aufweisen. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Insbesondere ist das Verwirbelungselement zumindest im Wesentlichen einstückig mit dem plattenartigen Element ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist das Verwirbelungselement dazu vorgesehen, zumindest eine Brenngasströmung zumindest teilweise zu verwirbeln. Alternativ wird vorgeschlagen, dass das Verwirbelungselement dazu vorgesehen ist, zumindest eine Oxidationsgasströmung zumindest teilweise zu verwirbeln.

Durch eine derartige Ausgestaltung kann eine gattungsgemäße Brennstoffzellenvorrichtung mit verbesserten Betriebseigenschaften bereitgestellt werden. Insbesondere kann eine vorteilhafte Strömungsverteilung der Gasströmung, insbesondere einer Brenngasströmung und/oder einer Oxidationsgasströmung innerhalb der Brennstoffzelleneinheit erreicht werden.

Ferner wird vorgeschlagen, dass das plattenartige Element eine Vielzahl von zumindest im Wesentlichen identisch ausgebildeten Verwirbelungselementen aufweist. Beispielsweise können die Verwirbelungselemente eine golfballartige Struktur mit einer Vielzahl von Dimples, eine insbesondere gleichmäßige Wellenstruktur oder eine Rillenstruktur ausbilden. Die Verwirbelungselemente können insbesondere eine zumindest im Wesentlichen identische geometrische Form aufweisen oder geometrisch verschieden ausgebildet sein. Hierdurch kann eine vorteilhafte Oberflächenstruktur des plattenartigen Elements ausgebildet werden.

Des Weiteren wird vorgeschlagen, dass die Brennstoffzellenvorrichtung eine zumindest im Wesentlichen parallel zu dem plattenartigen Element verlaufende Funktionsschicht aufweist, wobei das Verwirbelungselement dazu vorgesehen ist, die laminare Gasströmung zumindest teilweise in Richtung der Funktionsschicht umzulenken. Unter einer "Funktionsschicht" soll in diesem Zusammenhang insbesondere eine Schicht verstanden werden, welche insbesondere zumindest eine Anode und zumindest eine Kathode sowie zumindest einen zwischen der zumindest einen Anode und der zumindest einen Kathode angeordneten Elektrolyt aufweist. Insbesondere weist die zumindest eine Funktionsschicht eine Schichtdicke von maximal 50 µm, vorteilhaft von maximal 25 µm und besonders vorteilhaft von maximal 15 µm auf. Insbesondere ist das Verwirbelungselement dazu vorgesehen, eine Gasströmung zumindest teilweise in Richtung einer Anode und/oder einer Kathode der Funktionsschicht umzulenken. Das Verwirbelungselement ist insbesondere dazu vorgesehen eine Brenngasströmung zumindest teilweise in Richtung einer Anode der Funktionsschicht und/oder eine Oxidationsgasströmung in Richtung einer Kathode der Funktionsschicht umzulenken. Hierdurch kann eine vorteilhafte Versorgung der Funktionsschicht mit Reaktionsgasen erreicht werden. Insbesondere kann eine vorteilhafte Versorgung einer Kathode mit einem Oxidationsgas und/oder eine vorteilhafte Versorgung einer Anode mit einem Brenngas erreicht werden.

In einer Ausgestaltung der Erfindung wird vorgeschlagen, dass die Funktionsschicht unmittelbar auf dem plattenartigen Element angeordnet ist. Insbesondere weist das erste plattenartige Element zumindest einen zumindest im Wesentlichen porösen Bereich auf. Insbesondere ist der poröse Bereich offen porös ausgebildet. Unter einem "porösen Bereich" soll in diesem Zusammenhang insbesondere ein Bereich verstanden werden, welcher Hohlräume aufweist, die insbesondere fluidtechnisch untereinander und/oder mit einer Umgebung in Verbindung stehen. Insbesondere ist die Funktionsschicht auf dem porösen Bereich angeordnet. Insbesondere ist der poröse Bereich dazu vorgesehen einer Kathode der Funktionsschicht ein Oxidationsgas zuzuführen. Insbesondere ist eine Vielzahl von Verwirbelungselementen als zumindest im Wesentlichen kugelsegmentförmige Verwirbelungsausnehmungen in dem porösen Bereich angeordnet. Hierdurch kann eine Kathode der Funktionsschicht vorteilhaft mit einem Oxidationsgas versorgt werden.

In einer weiteren Ausgestaltung der Erfindung wird vorgeschlagen, dass die Brennstoffzellenvorrichtung ein weiteres plattenartiges Element aufweist, welches zumindest ein weiteres Verwirbelungselement aufweist, das dazu vorgesehen ist, eine weitere zumindest im Wesentlichen laminare Gasströmung zumindest teilweise zu verwirbeln. Insbesondere ist die Funktionsschicht zwischen dem plattenartigen Element und dem weiteren plattenartigen Element angeordnet. Insbesondere ist eines der plattenartigen Elemente dazu vorgesehen, einen Brenngasstrom zumindest teilweise in Richtung einer Anode der Funktionsschicht umzulenken, während ein zweites plattenartiges Element dazu vorgesehen ist, einen Oxidationsgasstrom zumindest teilweise in Richtung einer Kathode der Funktionsschicht umzulenken. Hierdurch kann eine vorteilhafte Versorgung der Funktionsschicht mit einem Brenngas und einem Oxidationsgas erreicht werden.

Zudem wird ein Brennstoffzellenstack mit zumindest zwei erfindungsgemäßen Brennstoffzellenvorrichtungen vorgeschlagen. Insbesondere sind die Brennstoffzellenvorrichtungen elektrisch und/oder fluidtechnisch verschaltet. Hierdurch kann auf einfache Weise ein Brennstoffzellenstack realisiert werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zehn Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Teilschnittdarstellung einer Brennstoffzellenvorrichtung,
- Fig. 2: eine Teilschnittdarstellung eines Brennstoffzellenstacks mit fünf Brennstoffzellenvorrichtungen gemäß Figur 1,
- Fig. 3: eine schematische Schnittdarstellung der Brennstoffzellenvorrichtung mit zwei plattenartigen Elementen, welche jeweils Verwirbelungselemente aufweisen,
- Fig. 4 - 6: schematische Darstellungen alternativer poröser plattenartiger Elemente,
- Fig. 7: eine schematische Schnittdarstellung einer alternativen Brennstoffzellenvorrichtung mit zwei plattenartigen Elementen, welche jeweils Verwirbelungselemente aufweisen,
- Fig. 8: eine schematische Schnittdarstellung einer weiteren alternativen Brennstoffzellenvorrichtung mit zwei plattenartigen Elementen, welche jeweils Verwirbelungselemente aufweisen,
- Fig. 9 - 12: schematische Darstellungen alternativer gasdichter plattenartiger Elemente.

### Beschreibung der Ausführungsbeispiele

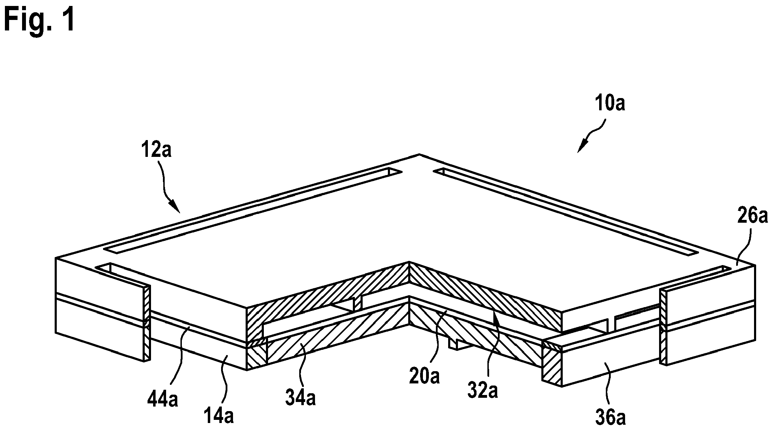

Figur 1 zeigt eine Teilschnittdarstellung einer Brennstoffzellenvorrichtung 10a. Die Brennstoffzellenvorrichtung 10a weist eine Brennstoffzelleneinheit 12a auf, welche einen Gasraum 32a definiert. Der Gasraum 32a ist dazu vorgesehen, in zumindest einem Betriebszustand zumindest ein Brenngas, insbesondere Wasserstoff, aufzunehmen. Die Brennstoffzelleneinheit 12a weist ein plattenartiges Element 14a und ein weiteres plattenartiges Element 26a auf, welche gemeinsam den Gasraum 32a definieren. Die plattenartigen Elemente 14a, 26a sind zumindest im Wesentlichen von einem keramischen Material gebildet.

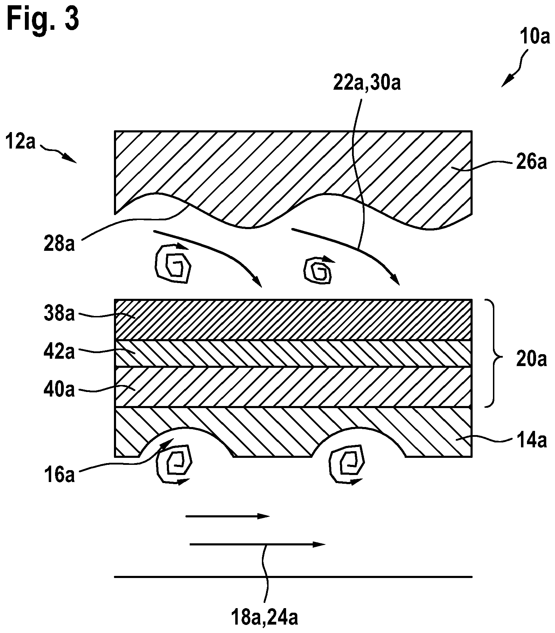

Das plattenartige Element 14a weist einen porösen Bereich 34a auf. Insbesondere ist der poröse Bereich 34a von einem porösen Forsteritmaterial gebildet. Ferner weist das plattenartige Element 14a einen im Wesentlichen gasdichten Bereich 36a auf, welcher den porösen Bereich 34a in Umfangsrichtung vollständig umschließt. Der gasdichte Bereich 36a ist insbesondere von einem dichten Forsteritmaterial gebildet. Die Brennstoffzellenvorrichtung 10a weist des Weiteren eine Funktionsschicht 20a auf, welche auf dem porösen Bereich 34a des plattenartigen Elements 14a angeordnet ist. Die Funktionsschicht 20a weist eine Anode 38a, eine Kathode 40a und einen zwischen der Anode 38a und der Kathode 40a angeordneten Elektrolyt 42a auf (vgl. Figur 3). Die Funktionsschicht 20a ist mit ihrer Kathodenseite auf dem porösen Bereich 34a angeordnet. Die Funktionsschicht 20a ist umlaufend von einem Rahmen 44a umgeben, welcher insbesondere von einem gasdichten keramischen Material gebildet ist. Ein Oxidationsgas, insbesondere Sauerstoff oder Luft, wird der Funktionsschicht 20a in einem Betriebszustand über den porösen Bereich 34a des plattenartigen Elements 14a zugeführt. Das weitere plattenartige Element 26a ist zumindest im Wesentlichen gasdicht ausgebildet. Das weitere plattenartige Element 26a ist insbesondere vollständig von einem dichten Forsteritmaterial gebildet. Das plattenartige Element 14a und das weitere plattenartige Element 26a sind insbesondere mittels einer Sinterverbindung miteinander verbunden.

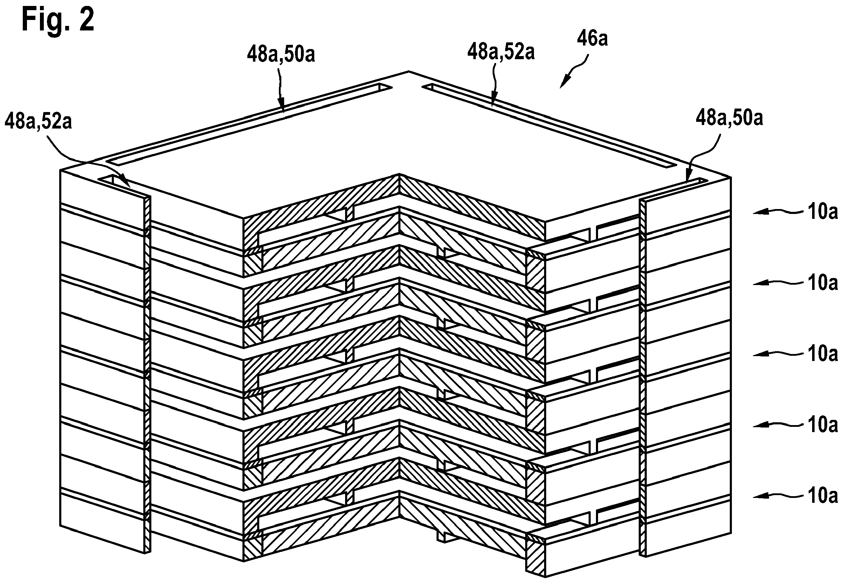

Figur 2 zeigt eine Teilschnittdarstellung eines Brennstoffzellenstacks 46a. Der Brennstoffzellenstack 46a umfasst hier beispielhaft fünf identisch ausgebildete Brennstoffzellenvorrichtungen 10a. Die Brennstoffzellenvorrichtungen 10b sind elektrisch und fluidtechnisch miteinander verschaltet. Die plattenartigen Elemente 14a, 26a weisen in Randbereichen Ausnehmungen 48a auf, welche innerhalb des Brennstoffzellenstacks 46a zu Brenngaskanälen 50a oder Oxidationsgaskanälen 52a verbunden sind.

Figur 3 zeigt die Brennstoffzelleneinheit 12a der Brennstoffzellenvorrichtung 10a in einer schematischen Schnittdarstellung. Das plattenartige Element 14a weist eine Vielzahl von Verwirbelungselementen 16a auf. Die Verwirbelungselemente 16a sind dazu vorgesehen, eine erste, als eine Oxidationsgasströmung 24a ausgebildete, zumindest im Wesentlichen laminare Gasströmung 18a zumindest teilweise zu verwirbeln. Das plattenartige Element 14a ist porös ausgebildet. Die Verwirbelungselemente 16a sind als kugelsegmentförmige Verwirbelungsausnehmungen in das plattenartige Element 14a eingebracht. Die Funktionsschicht 20a verläuft parallel zu dem plattenartigen Element 14a. Die Funktionsschicht 20a ist mit der Kathode 40a unmittelbar auf dem plattenartigen Element 14a angeordnet. Die Funktionsschicht 20a ist zwischen dem plattenartigen Element 14a und dem weiteren plattenartigen Element 26a angeordnet. Die Verwirbelungselemente 16a sind dazu vorgesehen, die erste laminare Gasströmung 18a zumindest teilweise in Richtung der Funktionsschicht 20a, insbesondere in Richtung der Kathode 40a, umzulenken. Ferner weist das weitere plattenartige Element 26a eine Vielzahl von weiteren Verwirbelungselementen 28a auf, welche dazu vorgesehen sind eine weitere, als eine Brenngasströmung 22a ausgebildete, zumindest im Wesentlichen laminare Gasströmung 30a zumindest teilweise zu verwirbeln. Die weiteren Verwirbelungselemente 28a sind dazu vorgesehen sind, die weitere laminare Gasströmung 30a zumindest teilweise in Richtung der Funktionsschicht 20a, insbesondere in Richtung der Anode 38a, umzulenken.

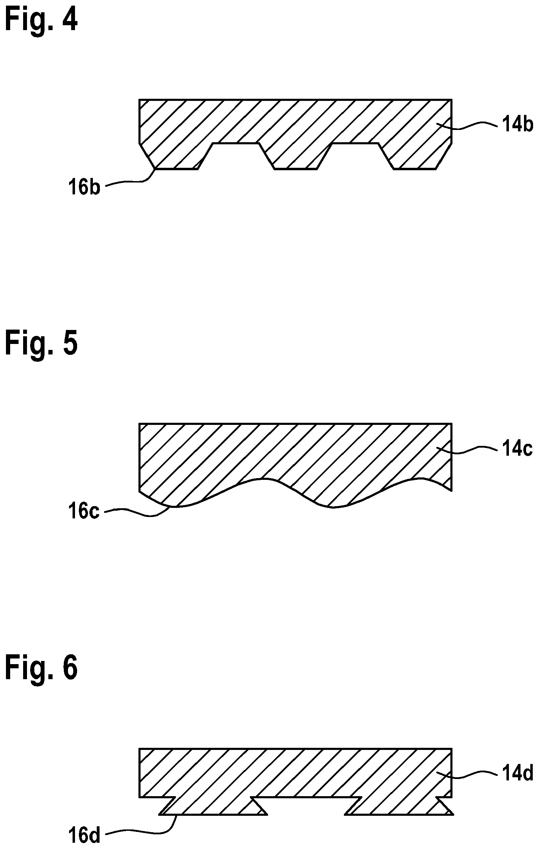

In den Figuren 4 bis 12 sind neun weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 12 ist der Buchstabe a durch die Buchstaben b bis j ersetzt.

Die Figuren 4 bis 6 zeigen beispielhafte alternative Ausbildungen von porösen plattenartigen Elementen 14b, 14c, 14d. Die plattenartigen Elemente 14b, 14c, 14d weisen jeweils eine Vielzahl von Verwirbelungselementen 16b, 16c, 16d auf, wobei sich die Verwirbelungselemente 16b, 16c, 16d hinsichtlich ihrer Geometrie unterscheiden.

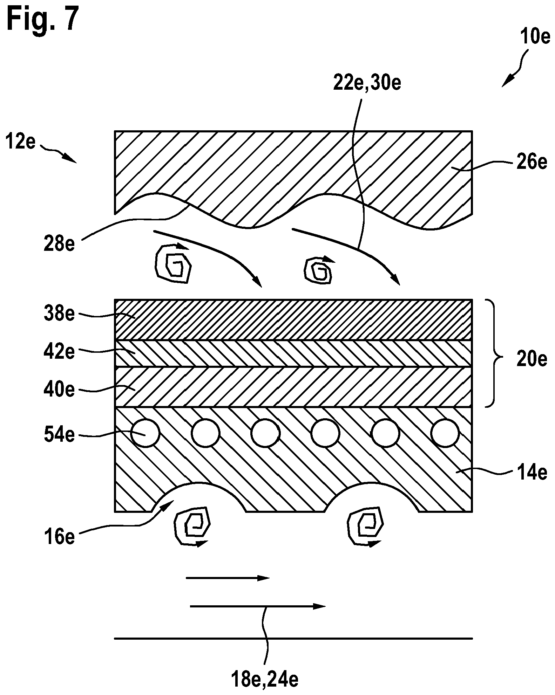

Figur 7 zeigt eine schematische Schnittdarstellung einer Brennstoffzelleneinheit 12e einer alternativen Brennstoffzellenvorrichtung 10e. Die Brennstoffzelleneinheit 12e weist ein plattenartiges Element 14e mit einer Vielzahl von Verwirbelungselementen 16e auf. Die Verwirbelungselemente 16e sind dazu vorgesehen, eine erste, als eine Oxidationsgasströmung 24e ausgebildete, zumindest im Wesentlichen laminare Gasströmung 18e zumindest teilweise zu verwirbeln. Das plattenartige Element 14e ist porös ausgebildet. Die Verwirbelungselemente 16e sind als kugelsegmentförmige Verwirbelungsausnehmungen in das plattenartige Element 14e eingebracht. Ferner weist das plattenartige Element 14e eine Vielzahl von parallel verlaufenden Luftkanälen 54e auf. Die Luftkanäle 54e sind dazu vorgesehen, einen widerstandsreduzierten Stofftransport einer Zu- und/oder Abluft zu ermöglichen. Ferner weist die Brennstoffzelleneinheit 12e eine Funktionsschicht 20e auf, welche parallel zu dem plattenartigen Element 14e verläuft. Die Funktionsschicht 20e ist mit einer Kathode 40e unmittelbar auf dem plattenartigen Element 14e angeordnet. Ferner weist die Brennstoffzelleneinheit 12e ein weiteres plattenartiges Element 26e mit einer Vielzahl von weiteren Verwirbelungselementen 28e auf, welche dazu vorgesehen sind eine weitere, als eine Brenngasströmung 22e ausgebildete, zumindest im Wesentlichen laminare Gasströmung 30e zumindest teilweise zu verwirbeln. Die Funktionsschicht 20e ist zwischen dem plattenartigen Element 14e und einem weiteren plattenartigen Element 26e angeordnet. Die Verwirbelungselemente 16e sind dazu vorgesehen, die erste laminare Gasströmung 18e zumindest teilweise in Richtung der Funktionsschicht 20e, insbesondere in Richtung der Kathode 40e, umzulenken. Die weiteren Verwirbelungselemente 28e sind dazu vorgesehen, die weitere laminare Gasströmung 30e zumindest teilweise in Richtung der Funktionsschicht 20e, insbesondere in Richtung der Anode 38e, umzulenken.

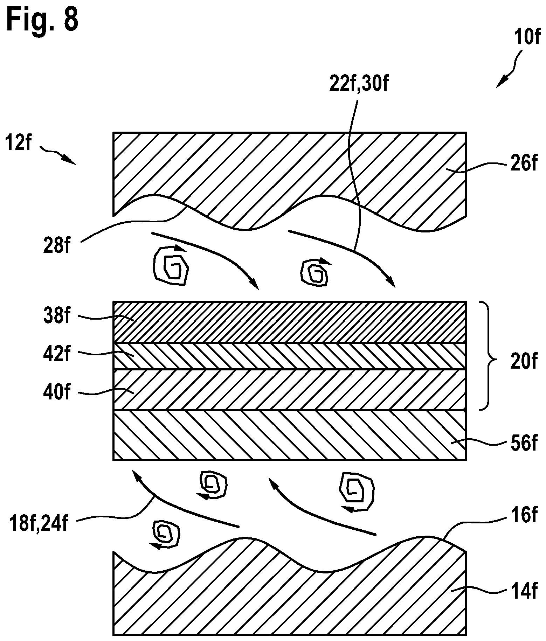

Figur 8 zeigt eine schematische Schnittdarstellung einer Brennstoffzelleneinheit 12f einer alternativen Brennstoffzellenvorrichtung 10f. Die Brennstoffzelleneinheit 12f weist ein plattenartiges Element 14f mit einer Vielzahl von Verwirbelungselementen 16f auf. Die Verwirbelungselemente 16f sind dazu vorgesehen, eine erste, als eine Oxidationsgasströmung 24f ausgebildete, zumindest im Wesentlichen laminare Gasströmung 18f zumindest teilweise zu verwirbeln. Das plattenartige Element 14f ist gasdicht ausgebildet. Ferner weist die Brennstoffzelleneinheit 12f eine Funktionsschicht 20f auf, welche parallel zu dem plattenartigen Element 14f verläuft. Die Funktionsschicht 20f ist mit einer Kathode 40f unmittelbar auf einer porösen Trägerplatte 56f angeordnet. Ferner weist die Brennstoffzelleneinheit 12f ein weiteres gasdichtes plattenartiges Element 26f mit einer Vielzahl von weiteren Verwirbelungselementen 28f auf, welche dazu vorgesehen sind eine weitere, als eine Brenngasströmung 22f ausgebildete, zumindest im Wesentlichen laminare Gasströmung 30f zumindest teilweise zu verwirbeln. Die Funktionsschicht 20f ist zwischen dem plattenartigen Element 14f und einem weiteren plattenartigen Element 26f angeordnet. Die Verwirbelungselemente 16f sind dazu vorgesehen sind, die erste laminare Gasströmung 18f zumindest teilweise in Richtung der Funktionsschicht 20f, insbesondere in Richtung der Kathode 40f, umzulenken. Die weiteren Verwirbelungselemente 28f sind dazu vorgesehen, die weitere laminare Gasströmung 30f zumindest teilweise in Richtung der Funktionsschicht 20f, insbesondere in Richtung der Anode 38f, umzulenken.

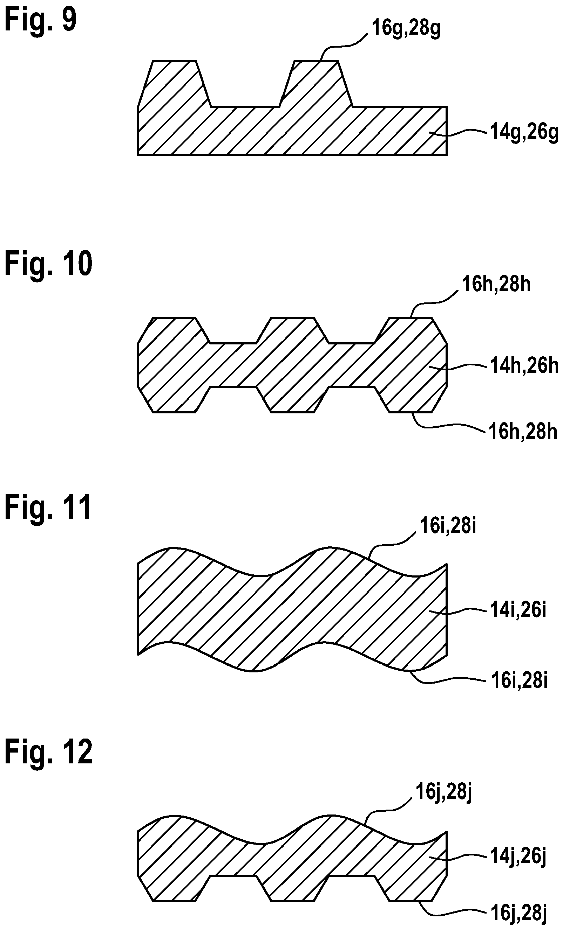

Die Figuren 9 bis 12 zeigen beispielhafte alternative Ausbildungen von gasdichten plattenartigen Elementen 14g, 26g, 14h, 26h, 14i, 26i, 14j, 26j. Die plattenartigen Elementen 14g, 26g, 14h, 26h, 14i, 26i, 14j, 26j weisen jeweils eine Vielzahl von Verwirbelungselementen 16g, 28g, 16h, 28h, 16i, 28i, 16j, 28j auf. Die Figuren 10 bis 12 zeigen jeweils plattenartige Elemente 14h, 26h, 14i, 26i, 14j, 26j, welche jeweils beidseitig Verwirbelungselemente 16h, 28h, 16i, 28i, 16j, 28j aufweisen.

## Patentansprüche

1. Brennstoffzellenvorrichtung, mit einer Brennstoffzelleneinheit (12a-j), welche zumindest ein plattenartiges Element (14a-j) aufweist, **dadurch gekennzeichnet, dass** das plattenartige Element (14a-j) zumindest ein Verwirbelungselement (16a-j) aufweist, welches dazu vorgesehen ist, eine zumindest im Wesentlichen laminare Gasströmung (18a-j) zumindest teilweise zu verwirbeln.

2. Brennstoffzellenvorrichtung nach Anspruch 1, **dadurch gekennzeichnet, dass** das plattenartige Element (14a-j) eine Vielzahl von zumindest im Wesentlichen identisch ausgebildeten Verwirbelungselementen (16a-j) aufweist.

3. Brennstoffzellenvorrichtung nach Anspruch 1 oder 2, **gekennzeichnet durch** eine zumindest im Wesentlichen parallel zu dem plattenartigen Element (14a-j) verlaufende Funktionsschicht (20a-j), wobei das Verwirbelungselement (16a-j) dazu vorgesehen ist, die laminare Gasströmung (18a-j) zumindest teilweise in Richtung der Funktionsschicht (20a-j) umzulenken.

4. Brennstoffzellenvorrichtung nach Anspruch 3, **dadurch gekennzeichnet, dass** die Funktionsschicht (20a-e) unmittelbar auf dem plattenartigen Element (14a-e) angeordnet ist.

5. Brennstoffzellenvorrichtung nach einem der vorhergehenden Ansprüche, **dadurch gekennzeichnet, dass** das Verwirbelungselement (16a-j; 26a-j) dazu vorgesehen ist, zumindest eine Brenngasströmung (22a-j) zumindest teilweise zu verwirbeln.

6. Brennstoffzellenvorrichtung nach einem der vorhergehenden Ansprüche, **dadurch gekennzeichnet, dass** das Verwirbelungselement (16a-j; 26a-j) dazu vorgesehen ist, zumindest eine Oxidationsgasströmung (24a-j) zumindest teilweise zu verwirbeln.

7. Brennstoffzellenvorrichtung nach einem der vorhergehenden Ansprüche, **gekennzeichnet durch**, ein weiteres plattenartiges Element (26a-j), welches zumindest ein weiteres Verwirbelungselement (28a-j) aufweist, das dazu vorgesehen ist, eine weitere zumindest im Wesentlichen laminare Gasströmung (30a-j) zumindest teilweise zu verwirbeln.

8. Brennstoffzellenvorrichtung zumindest nach den Ansprüchen 3 und 7, **dadurch gekennzeichnet, dass** die Funktionsschicht (20a-j) zwischen dem plattenartigen Element (14a-j) und dem weiteren plattenartigen Element (26a-j) angeordnet ist.

9. Plattenartiges Element für eine Brennstoffzellenvorrichtung (10a-j) nach einem der Ansprüche 1 bis 8.

10. Brennstoffzellenstack mit zumindest zwei Brennstoffzellenvorrichtungen (10a-j) nach einem der Ansprüche 1 bis 8.
